# EUROPÄISCHE PATENTSCHRIFT

(11) **EP 1 098 453 B1**
(45) Veröffentlichungstag und Bekanntmachung des Hinweises auf die Patenterteilung: **05.04.2006**
(21) Anmeldenummer: 00120343.9
(22) Anmeldetag: 16.09.2000
(51) Int. Cl.: H04B 7/08

(54) **Verfahren zur Auswahl einer von mehreren Antennen einer Antennediversity-Empfangsanlage sowie Antennendiversity-Empfangsanlage**
Method for selecting an antenna among a plurality of antennas in an antenna diversity reception installation and antenna diversity reception installation
Procédé pour sélectionner une antenne parmi une pluralité d'antennes dans une installation de réception en diversité d'antennes et installation de réception en diversité d'antennes

(30) Priorität: 08.11.1999 DE 19953731
(43) Veröffentlichungstag der Anmeldung: 09.05.2001
(73) Patentinhaber: BECKER GmbH, D-76307 Karlsbad (DE)
(72) Erfinder: Brinkhaus, Stefan, 75196 Remchingen (DE); Becker, Karl-Anton, 76307 Karlsbad (DE)
(74) Vertreter: Patentanwälte Westphal, Mussgnug & Partner

(56) Entgegenhaltungen:
- EP-A- 0 270 188
- EP-A- 0 475 188
- EP-A- 0 792 031
- WO-A-94/10764
- DE-A- 3 938 717
- DE-A- 19 603 514
- US-A- 3 765 015
- US-A- 5 826 179

## Beschreibung

Die Erfindung betrifft ein Verfahren zur Auswahl einer von mehreren Antennen einer Antennendiversity-Empfangsanlage mit einem Antennenwahlschalter, mit einer Auswerteschaltung und mit einem Funkempfänger, wobei der Antennenwahlschalter vom Funkempfänger räumlich getrennt ist, während die Auswerteschaltung beim oder im Funkempfänger angeordnet ist, wobei die Antennen und der Antennenwahlschalter über eine gemeinsame Antennenleitung mit dem Funkempfänger verbunden sind und wobei der Antennenwahlschalter zu einer Antenneneinheit gehört, während der Funkempfänger und die Auswerteschaltung zu einer Empfangseinheit gehören, die räumlich voneinander getrennt sind.

Die Erfindung betrifft weiter eine Antennendiversity-Empfangsanlage mit einem Antennenwahlschalter, mit einer Auswerteschaltung und mit einem Funkempfänger, wobei der Antennenwahlschalter vom Funkempfänger räumlich getrennt ist, während die Auswerteschaltung beim oder im Funkempfänger angeordnet ist, wobei die Antennen und der Antennenwahlschalter über eine gemeinsame Antennenleitung mit dem Funkempfänger verbunden sind und wobei der Antennenwahlschalter zu einer Antenneneinheit gehört, während der Funkempfänger und die Auswerteschaltung zu einer Empfangseinheit gehören, die räumlich voneinander getrennt sind.

Eine derartige Antennendiversity-Empfangsanlage ist in DE 196 03 514 A1 beschrieben.

Es ist nun Aufgabe der Erfindung, die in DE 196 03 514 A1 offenbarte Antennendiversity-Empfangsanlage zu verbessern und insbesondere ihre Betriebssicherheit zu erhöhen und die Steuerung der Antenneneinheit zu vereinfachen.

Verfahrensmäßig wird diese Aufgabe durch die im Anspruch 1 angegebenen Merkmale dadurch gelöst, dass die Antennenleitung in der Antenneneinheit über einen Ruhelastwiderstand auf Bezugspotential liegt, dass zum Einschalten der Antenneneinheit die Empfangseinheit die Antenneneinheit mit einem Gleichstrom beaufschlagt, der in der Antenneneinheit einen Lastwiderstand parallel zum Ruhelastwiderstand schaltet, dass die Empfangseinheit an der Widerstandsverringerung erkennt, dass die Antenneneinheit aktiviert ist, dass zum Ausschalten der Antenneneinheit der Gleichstrom von der Empfangseinheit abgeschaltet und der Lastwiderstand vom Ruhelastwiderstand getrennt wird, so dass die Empfangseinheit an der Widerstandserhöhung erkennt, dass die Antenneneinheit inaktiviert ist.

Eine erste vorrichtungsmäßige Lösung dieser Aufgabe gemäß den Merkmalen des Anspruchs 11 sieht vor, dass die Antennen an die Eingänge des Antennenwahlschalters angeschlossen sind, dessen Ausgang mit dem Eingang einer ersten Weiche verbunden ist, deren erster Ausgang mit dem Steuereingang einer Steuerschaltung verbunden ist und deren zweiter Ausgang über einen Ruhelastwiderstand und einen mittels eines steuerbaren Schalters parallel zum Ruhelastwiderstand schaltbaren Lastwiderstand auf Bezugspotential liegt, dass ein erster Steuerausgang der Steuerschaltung mit dem Steuereingang des Antennenwahlschalters und ein zweiter Steuerausgang der Steuerschaltung mit dem Steuereingang des steuerbaren Schalters verbunden ist, dass der Antennenwahlschalter, die erste Weiche, die Steuerschaltung, der steuerbare Schalter, der Ruhelastwiderstand und der Lastwiderstand die Antenneneinheit bilden, dass der Ausgang einer zweiten Weiche mit dem Eingang des Funkempfängers verbunden ist, dass ein erster Ausgang des Funkempfängers mit dem Eingang der Auswahlschaltung und ein zweiter Ausgang des Funkempfängers mit einem ersten Eingang einer logischen Schaltungsanordnung verbunden ist, dass ein erster Ausgang der Auswahlschaltung mit einem zweiten Eingang der logischen Schaltungsanordnung und der Ausgang der logischen Schaltungsanordnung mit einem zweiten Eingang der Auswahlschaltung verbunden ist, dass der Ausgang der Auswahlschaltung mit einem ersten Eingang der zweiten Weiche verbunden ist, dass die zweite Weiche, der Funkempfänger, die Auswahlschaltung und die logische Schaltung die Empfangseinheit bilden und dass die erste Weiche der Antenneneinheit über eine Antennenleitung mit der zweiten Weiche der Empfangseinheit verbunden ist.

Eine zweite vorrichtungsmäßige im Anspruch 12 angegebene Lösung dieser Aufgabe sieht vor, dass die Antennen an die Eingänge des Antennenwahlschalters angeschlossen sind, dessen Ausgang mit dem Eingang einer ersten Weiche verbunden ist, deren erster Ausgang mit dem Steuereingang einer Steuerschaltung verbunden ist und deren zweiter Ausgang über einen Ruhelastwiderstand und einen mittels eines steuerbaren parallel zum Ruhelastwiderstand schaltbaren Lastwiderstand auf Bezugspotential liegt, dass ein erster Steuerausgang der Steuerschaltung mit dem Steuereingang des Antennenwahlschalters und ein zweiter Steuerausgang der Steuerschaltung mit dem Steuereingang des steuerbaren Schalters verbunden ist, dass der Antennenwahlschalter, die erste Weiche, die Steuerschaltung, der steuerbare Schalter, der Ruhelastwiderstand und der Lastwiderstand die Antenneneinheit bilden, dass der Ausgang einer zweiten Weiche mit dem Eingang des Funkempfängers verbunden ist, dass der Ausgang eines Stördetektors des Funkempfängers mit dem Eingang eines Integrators verbunden ist, dessen Ausgang mit dem Eingang eines Schwellwertdetektors verbunden ist, dass der Ausgang des Schwellwertdetektors mit einem ersten Eingang eines Impulsgenerators verbunden ist, dessen Ausgang mit einem ersten Eingang der zweiten Weiche verbunden ist, dass die zweite Weiche, der Funkempfänger, der Stördetektor, der Integrator, der Schwellwertdetektor und der Impulsgenerator die Empfangseinheit bilden und dass die erste Weiche der Antenneneinheit über eine Antennenleitung mit der zweiten Weiche der Empfangseinheit verbunden ist.

Das erfindungsgemäße Verfahren und die erfindungsgemäße Antennendiversity-Empfangsanlage werden anhand der Figuren beschrieben und erläutet. In der Zeichnung zeigen:
- Fig. 1: ein erstes Ausführungsbeispiel und
- Fig. 2: ein zweites Auführungsbeispiel einer erfindungsgemäßen Antennendiversity-Empfangsanlage.

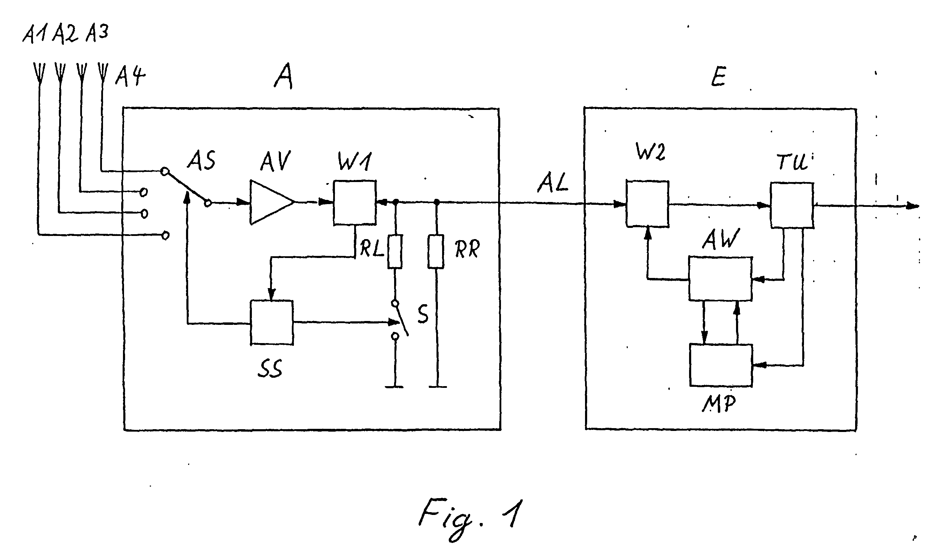

Bei dem in der Fig. 1 abgebildeten ersten Ausführungsbeispiel einer erfindungsgemäßen Antennendiversity-Empfangsanlage sind mehrere Antennen A1 bis A4 an die Eingänge eines Antennenwahlschalters AS angeschlossen, dessen Ausgang an den Eingang eines Antennenverstärkers AV angeschlossen ist, der jedoch nicht zwingend erforderlich ist oder an anderer Stelle angeordnet sein kann. Der Ausgang des Antennenverstärkers AV ist mit einem Eingang einer Weiche W1 verbunden. Ein erster Ausgang der Weiche W1 liegt über eine Parallelschaltung aus einem Ruhelastwiderstand RR und einer Serienschaltung aus einem Lastwiderstand RL und einem steuerbaren Schalter S auf Bezugspotential. Ein zweiter Ausgang der Weiche W1 ist mit dem Eingang einer Steuerschaltung SS verbunden, deren erster Steuerausgang mit dem Steuereingang des Antennenwahlschalters AS und deren zweiter Steuerausgang mit dem Steuereingang des steuerbaren Schalters S verbunden ist. Der Antennenwahlschalter AS, der Antennenverstärker AV, die Weiche W1, der Ruhelastwiderstand RR, der Lastwiderstand RL, der steuerbare Schalter S und die Steuerschaltung SS bilden eine Antenneneinheit A, die räumlich von einer Empfangseinheit E getrennt ist.

In der Empfangseinheit E ist der Ausgang einer Weiche W2, deren erster Eingang über eine Antennenleitung AL mit der Weiche W1 der Antenneneinheit A verbunden ist, mit dem Eingang eines Funkempfängers TU verbunden. Der NF-Ausgang des Funkempfängers TU ist mit der nichtgezeigten NF-Stufe der Empfangseinheit E verbunden. Ein erster Ausgang des Funkempfängers TU ist mit einem ersten Eingang einer Auswerteschaltung AW und ein zweiter Ausgang des Funkempfängers TU ist mit einem ersten Eingang einer logischen Schaltungsanordnung MP verbunden. Ein erster Ausgang der Auswerteschaltung AW ist mit dem zweiten Eingang der Weiche W2 verbunden, während ein zweiter Ausgang der Auswerteschaltung AW mit einem zweiten Eingang der logischen Schaltungsanordnung MP verbunden ist. Der Steuerausgang der logischen Schaltungsanordnung MP, für die ein Mikroprozessor, ein Mikrocontroller oder ein Mikrocomputer besonders gut geeignet sind, ist mit dem Steuereingang der Auswerteschaltung AW verbunden.

Es wird nun das erfindungsgemäße Verfahren gemäß Anspruch 1 anhand der in Fig. 1 abgebildeten Antennendiversity-Empfangsanlage erläutert.

Zum Einschalten der Antenneneinheit A wird die Antenneneinheit A über die Antennenleitung AL mit einem Gleichstrom von der Empfangseinheit E beaufschlagt, der in der Antenneneinheit A bewirkt, dass die Steuerschaltung SS den steuerbaren Schalter S schließt, um den Lastwiderstand RL parallel zum Ruhelastwiderstand RR zu schalten. Die logische Schaltungsanordnung MP erkennt nun an der Erniedrigung des Widerstandes in Folge der Parallelschaltung des Ruhelastwiderstandes RR und des Lastwiderstandes RL am Eingang der Antenneneinheit A, dass die Antenneneinheit A eingeschaltet bzw. aktiviert ist. Zum Ausschalten bzw. Inaktivieren der Antenneneinheit A schaltet die logische Schaltungsanordnung MP den Gleichstrom ab. Die Steuerschaltung SS öffnet den steuerbaren Schalter S, so dass der Lastwiderstand RL vom Ruhelastwiderstand RR getrennt wird. An der Erhöhung des Widerstandes am Eingang der Antenneneinheit A auf den Wert des Ruhelastwiderstandes RR erkennt die logische Schaltungsanordnung MP in der Empfangseinheit, dass der Ausschaltbefehl ausgeführt wurde und die Antenneneinheit A ausgeschaltet bzw. inaktiviert ist.

Bei Betrieb einer Antennendiversity-Empfangsanlage treten aber häufig derart ungünstige Empfangsbedingungen auf, dass die Auswahlschaltung ständig von einer Antenne auf die andere umschaltet. Diese Umschaltvorgänge beeinträchtigen aber die akustische Wiedergabe des Rundfunkempfangsgerätes. Zusätzlich verursacht jede Antenne bedingt durch ihre Empfangsstörungen und den Rauschpegel ihr eigenes Klangbild bei der akustischen Wiedergabe durch den Lautsprecher. Der Hörer bemerkt daher ständig von Umschaltvorgang zu Umschaltvorgang wechselnde Klangbilder des Lautsprechers, was einen unangenehmen, unruhigen, unsteten Höreindruck vermittelt, den man treffend als einen brutzelnden Höreindruck bezeichnen kann.

Eine derart ungünstige Empfangsbedingung, die zu häufigem unnötigem Umschalten auf eine andere Antenne führt, liegt zum Beispiel vor, wenn ein Sender mit nur geringer Feldstärke empfangen wird, weil Rauschen und andere Empfangsstörungen dann kaum voneinander zu unterscheiden sind. Doch auch bei hohen Empfangsfeldstärken kann es vorkommen, dass eine Antenne mit stark gestörtem Empfang häufig, wenn auch nur kurzfristig, an den Funkempfänger geschaltet wird, obwohl andere Antennen einen besseren Empfang bieten. Wenn Nachbarkanalstörungen auftreten, liegt ebenfalls eine Empfangsbedingung vor, die häufiges Umschalten auf andere Antennen bewirkt.

Um unnötige Umschaltungen auf eine andere Antenne weitestgehend zu vermeiden, sieht ein erstes Ausführungsbeispiel des erfindungsgemäßen Verfahrens vor, dass die logische Schaltungsanordnung MP die Auswahl einer Antenne nach anderen Kriterien als die Auswerteschaltung AW vornimmt, wenn die Feldstärken bei allen Antennen über einem oberen Schwellwert oder unter einem unteren Schwellwert liegen.

Wie bereits erläutert, führt bei niedrigen Feldstärken die Auswahlschaltung AW häufig unnötige Umschaltungen auf andere Antennen durch, weil die niederen Feldstärken Rauschen und andere Empfangsstörungen kaum oder gar nicht voneinander zu 5 unterscheiden sind. Dies kann zum Beispiel dazu führen, dass bei niederen Feldstärken bei allen durchgeschalteten Antennen Störungen detektiert werden, obwohl in Wirklichkeit nur erhöhtes Rauschen vorhanden ist. Bei derart ungünstigen Empfangsbedingungen schaltet der Antennenwahlschalter ständig auf eine andere Antenne um.

Aber auch bei hohen Feldstärken kann es häufig vorkommen, dass eine stark gestörte Antenne vom Antennenwahlschalter kurzfristig an den Funkempfänger geschaltet wird, obwohl andere Antennen einen besseren Empfang haben.

Um nun unnötiges Umschalten von einer Antenne auf eine andere bei niederen oder bei hohen Feldstärken zu vermeiden, steuert eine logische Schaltungsanordnung die Auswahl einer Antenne nach anderen Kriterien als die Auswerteschaltung. Wenn die Feldstärke an den Antennen A1 bis A4 unter einen vorgebbaren unteren Schwellwert sinkt, inaktivert die logische Schaltungsanordnung MP die Auswerteschaltung AW und übernimmt die Steuerung des Antennenwahlschalters AS. Jedoch trifft die logische Schaltungsanordnung MP die Auswahl einer Antenne nach anderen Kriterien als die Auswerteschaltung AW. Beispielsweise schaltet die logische Schaltungsanordnung MP die Antenne mit der größten Feldstärke oder der geringsten Störung an den Funkempfänger TU. Das Umschaltkriterium kann auch eine Kombination aus den beiden genannten Kriterien sein. Sobald die Feldstärke an den Antennen A1 bis A4 den vorgebbaren unteren Schwellwert überschreiten, aktiviert die logische Schaltungsanordnung MP wieder die Auswerteschaltung AW, die nun erneut die Umschaltung von einer Antenne auf eine andere steuert.

Wenn die Feldstärke an den Antennen A1 bis A4 einen oberen Schwellwert überschreitet, inaktiviert die logische Schaltungsanordnung MP die Auswerteschaltung AW und übernimmt wie bei einer Feldstärke, die unterhalb des unteren Schwellwertes liegt, die Steuerung des Antennenwahlschalters AS. Sinkt die Feldstärke an den Antennen A1 bis A4 wieder unter den vorgebbaren oberen Schwellwert, so aktiviert die logische Schaltungsanordnung MP wieder die Auswerteschaltung AW, die nun erneut die Umschaltvorgänge von einer Antenne auf eine andere steuert.

Es werden daher unnötige Umschaltungen auf andere Antennen bei niederen und bei hohen Feldstärken an den Antennen vermieden.

Ein zweites Ausführungsbeispiel des erfindungsgemäßen Verfahrens zur Vermeidung unnötiger Umschaltvorgänge sieht vor, dass die logische Schaltungsanordnung MP die Anzahl der je Zeiteinheit auftretenden Umschaltvorgänge von einer Antenne auf eine andere Antenne erfasst und dass bei einer vorgegebenen Höchstzahl an Umschaltvorgängen je Zeiteinheit die logische Schaltungsanordnung MP die Auswahl einer Antenne nach anderen Kriterien als die Auswerteschaltung AW vornimmt.

Die logische Schaltungsanordnung MP zählt die je Zeiteinheit auftretenden Umschaltvorgänge von einer Antenne auf eine andere. Überschreitet die Anzahl der Umschaltvorgänge je Zeiteinheit eine vorgebbare Höchstzahl, inaktiviert die logische Schaltungsanordnung MP die Auswerteschaltung AW, um die Steuerung des Antennenwahlschalters AS zu übernehmen, wobei die logische Schaltungsanordnung MP jedoch nach anderen Kriterien als die Auswerteschaltung AW entscheidet: Wenn die Anzahl der Umschaltvorgänge je Zeitheinheit nach den Kriterien der Auswerteschaltung AW wieder unter die vorgegebene Höchstzahl fällt, aktiviert die logische Schaltungsanordnung MP wieder die Auswerteschaltung AW, die nun nach ihren Kriterien die Umschaltung auf andere Antennen vornimmt.

Eine Ausgestaltung dieses Verfahrens sieht vor, dass die logische Schaltungsanordnung MP die Anzahl der Umschaltvorgänge je Zeiteinheit auf eine vorgebbare Höchstzahl begrenzt. Beispielsweise kann die Anzahl der Umschaltungen auf eine für eine Zeitspanne von fünf Sekunden begrenzt sein. Wenn die Auswerteschaltung AW innerhalb dieser Zeitspanne von fünf Sekunden mehr als eine Umschaltung fordert, werden die restlichen vier Umschaltungen von der logischen Schaltungsanordnung MP ignoriert, so dass der Antennenwahlschalter innerhalb der Zeitspanne von fünf Sekunden nur einmal betätigt wird, um eine andere Antenne an den Funkempfänger TU anzuschließen.

Wenn Nachbarkanäle den Empfangskanal stören, liegt ebenfalls eine ungünstige Empfangsbedingung vor, die zu häufigem Umschalten von einer Antenne auf eine andere führt.

Um bei Nachbarkanalstörungen unnötiges Umschalten von einer Antenne auf eine andere zu vermeiden, ist die Bandbreite der Auswerteschaltung gleichgroß gewählt wie die der ZF-Selektion des Funkempfängers. Durch diese Maßnahme sieht die Auswerteschaltung AW gewissermaßen die gleiche Bandbreite wie der Funkempfänger TU. Bei den bekannten Antennendiversity-Empfangsanlagen ist dagegen die Bandbreite der Auswerteschtung AW größer gewählt als die beim Funkempfänger TU, so dass die Auswerteschaltung AW eine größere Bandbreite sieht als der Funkempfänger TU. Aus diesem Grunde werden Nachbarkanalstörungen bei bekannten Antennendiversity-Empfangsanlagen als störender eingestuft als sie in Wirklichkeit sind. Diese falsche Bewertung der Nachbarkanalstörungen bewirkt natürlich unnötige Umschaltungen auf andere Antennen, die bei dem erfindungsgemäßen Verfahren nach Anspruch 4 vermieden werden, weil die Auswerteschaltung AW die gleiche Bandbreite hat wie die ZF-Selektion des Funkempfängers TU. Wegen der gleichen Bandbreiten werden Nachbarkanalstörungen bei der Erfindung von der Auswerteschaltung AW nicht überbewertet, sondern richtig eingestuft.

Besonders vorteilhaft ist es, die Auswerteschaltung AW in der Empfangseinheit E beim Funkempfänger TU anzuordnen und die Filter des Funkempfängers TU auch für die Auswerteschaltung AW zu nutzen. Diese Maßnahme hat neben der gleichen Bandbreite noch den weiteren Vorteil, dass für die Auswerteschaltung AW keine Filter mehr erforderlich sind. Die Auswerteschaltung AW lässt sich daher preisgünstiger herstellen. Außerdem brauchen für die Auswerteschaltung nicht mehr Filter gleicher Dimension wie beim Funkempfänger TU ausgesucht zu werden, was bei Einsatz von Keramikfiltern einen bedeutenden Vorteil mit sich bringt, weil Keramikfilter mit erwünschten engen Toleranzen nicht herstellbar sind. Bei der Herstellung von Keramikfiltern sind daher aus einer Vielzahl von Filtern diejenigen herauszufinden, die ungefähr die gleichen Werte haben.

Das ZF-Signal für die Auswerteschaltung AW kann zum Beispiel an der letzten ZF-Stufe des Funkempfängers TU abgegriffen und unmittelbar der Auswerteschaltung AW zugeführt werden. Wird das ZF-Signal für die Auswerteschaltung AW an einer anderen Stufe des Funkempfängers TU abgegriffen, so ist es über einen Bandpass der Auswerteschaltung AW zuzuleiten.

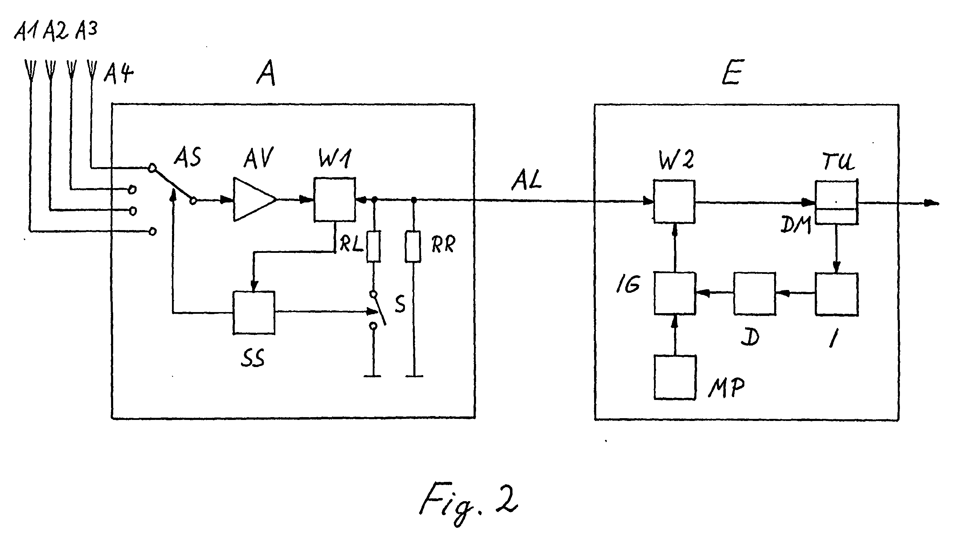

Es wird nun das in der Fig. 2 gezeigte Ausführungsbeispiel einer erfindungsgemäßen Antennendiversity-Empfangsanlage beschrieben und erläutert.

Auch dieses Ausführungsbeispiel ist aus einer Antenneneinheit A und einer Empfangseinheit E aufgebaut. Die Antenneneinheit A hat denselben Aufbau wie in der Fig. 1.

In der Empfangseinheit E ist der Ausgang der Weiche W2 mit dem Eingang des Funkempfängers TU verbunden, dessen Ausgang mit dem nicht dargestellten NF-Teil der Empfangseinheit E verbunden ist. Der Ausgang eines Stördetektors DM ist mit dem Eingang eines Integrators I verbunden, dessen Ausgang mit dem Eingang eines Schwellwertdetektors D verbunden ist. Der Ausgang des Schwellwertdetektors D ist mit dem Eingang eines Impulsgenerators IG verbunden, dessen Ausgang mit einem Eingang der Weiche W2 verbunden ist. An den Impulsgenerator IG kann eine logische Schaltungsanordnung, zum Beispiel ein Mikroprozessor MP, ein Mikrocontroller oder ein Mikrocomputer angeschlossen sein.

Bei Emfpangsstörungen treten am Ausgang des Stördetektors DM des Funkempfängers TU Störungen anzeigende Impulse auf, die im Integrator I integriert werden. Sobald das Integral der integrierten Störungen anzeigenden Impulse einen vorgebbaren Schwellwert überschreitet, gibt der Schwellwertdetektor D einen Impuls an den Impulsgenerator IG ab, der ein Schaltsignal über die Weiche W2, die Antennenleitung AL und die Weiche W1 zur Steuerschaltung SS der Antenneneinheit A sendet. Das vom Impulsgenerator IG ausgesandte Schaltsignal bwirkt, dass die Steuerschlatung SS den Antennenwahlschalter AS schaltet, um eine andere Antenne mit dem Funkempfänger TU zu verbinden. Wie bei der zuvor an den Funkempfänger TU angeschlossenen Antenne werden wieder im Integrator I die Störimpulse am Ausgang des Demodulators DM integriert. Erreicht das Integral den vorgebbaren Schwellwert, so gibt der Impulsgenerator IG wieder ein Schaltsignal an die Steuerschaltun SS der Antenneinheit A ab, die den Antennenwahlschalter AS weiter zu einer anderen Antenne schaltet. Der Impulsgenerator IG kann zusätzlich vom Mikroprozessor MP gesteuert werden. Der Integrator I, der Schwellwertdetektor D und der Impulsgenerator IG können im Mikroprozessor MP integriert sein.

In EP 0 475 188 B1 ist beispielsweise ein Stördetektor für einen Funkempfänger beschrieben, der bei Störungen, zum Beispiel Amplitudeneinbrüchen, Störungen anzeigende Impulse erzeugt. Dieser Stördetektor lässt sich in vorteilhafter Weise einsetzen.

Die beschriebenen Verfahren für eine Antennendiversity-Empfangsanlage, die sich beliebig miteinander kombinieren lassen, sowie die beschriebenen Antennendiversity-Empfangsanlagen sind sowohl für ortsfeste als auch für mobile Empfangsanlagen geeignet. Besonders vorteilhaft lassen sie sich bei mobilen Empfangsanlagen wie zum Beispiel einer Rundfunk-, Fernsehempfangsanlage oder einem mobilen Telefon eines Fahrzeuges einsetzen. Wie bereits erwähnt, können die Antennen der erfindungsgemäßen Antennendiversity-Empfangsanlage als Scheibenantennen in den Scheiben des Fahrzeuges integriet sein.

### Bezugszeichenliste

- A: Antenneneinheit
- A1 - A4: Antenne
- AL: Antennenleitung
- AS: Antennenwahlschalter
- AV: Antennenverstärker
- AW: Auswerteschaltung
- D: Schwellwertdetektor
- DM: Stördetektor
- E: Empfangseinheit
- I: Integrator
- IG: Impulsgenerator
- MP: logische Schaltungsanordnung
- RL: Lastwiderstand
- RR: Ruhelastwiderstand
- SS: Steuerschaltung
- TU: Funkempfänger
- W1: Weiche
- W2: Weiche

## Patentansprüche

1. Verfahren zur Auswahl einer von mehreren Antennen (A1, A2, A3, A4) einer Antennendiversity-Empfangsanlage mit einem Antennenwahlschalter (AS), mit einer Auswerteschaltung (AW) und mit einem Funkempfänger (TU), wobei der Antennenwahlschalter (AS) vom Funkempfänger (TU) räumlich getrennt ist, während die Auswerteschaltung (AW) beim oder im Funkempfänger (TU) angeordnet ist, wobei die Antennen (A1, A2, A3, A4) und der Antennenwahlschalter (AS) über eine gemeinsame Antennenleitung (AL) mit dem Funkempfänger (TU) verbunden sind und wobei der Antennenwahlschalter (AS) zu einer Antenneneinheit (A) gehört, während der Funkempfänger (TU) und die Auswerteschaltung (AW) zu einer Empfangseinheit (E) gehören, die räumlich voneinander getrennt sind,
**dadurch gekennzeichnet, dass** die Antennenleitung (AL) in der Antenneneinheit (A) über einen Ruhelastwiderstand (RR) auf Bezugspotential liegt, dass die Antenneneinheit (A) zum Einschalten mit einem Gleichstrom von der Empfangseinheit (E) beaufschlagt wird, der in der Antenneneinheit (A) einen Lastwiderstand (RL) parallel zum Ruhelastwiderstand (RR) schaltet, dass die Empfangseinheit (E) an der Verringerung des Widerstandes infolge der Parallelschaltung des Ruhelastwiderstandes (RR) und des Lastwiderstandes (RL) erkennt, dass die Antenneneinheit (A) eingeschaltet ist, dass zum Ausschalten der Antenneneinheit (A) der Gleichstrom von der Empfangseinheit (E) abgeschaltet und der Lastwiderstand (RL) vom Ruhelastwiderstand (RR) getrennt wird, so dass die Empfangseinheit (E) an der Erhöhung des Widerstandes erkennt, dass die Antenneneinheit (A) ausgeschaltet ist.

2. Verfahren nach Anspruch 1,
**dadurch gekennzeichnet, dass** in der Antenneneinheit (A) eine Steuerschaltung (SS) den Antennenwahlschalter (AS) und einen steuerbaren Schalter (S) steuert, der den Lastwiderstand (RL) parallel zum Ruhelastwiderstand (RR) schaltet.

3. Verfahren nach Anspruch 1 oder 2,
**dadurch gekennzeichnet, dass** in der Empfangseinheit (E) die Auswahlschaltung (AW) und eine logische Schaltungsanordnung (MP) die Steuersignale für die Antenneneinheit (A) erzeugen.

4. Verfahren nach Anspruch 1, 2 oder 3,
**dadurch gekennzeichnet, dass** die logische Schaltungsanordnung (MP) die Auswahl einer Antenne nach anderen Kriterien als die Auswerteschaltung (AW) vornimmt, wenn die Feldstärke bei allen Antennen (A1, A2, A3, A4) über einem oberen oder unter einem unteren Schwellwert liegt.

5. Verfahren nach Anspruch 1, 2, 3 oder 4,
**dadurch gekennzeichnet, dass** die logische Schaltungsanordnung (MP) die Anzahl der je Zeiteinheit auftretenden Umschaltvorgänge von einer Antenne auf eine andere Antenne zählt, dass bei einer vorgebbaren Höchstzahl an Umschaltungen je Zeiteinheit die logische Schaltungsanordnung (MP) die Auswahl einer Antenne nach anderen Kriterien als die Auswerteschaltung vornimmt.

6. Verfahren nach Anspruch 1, 2, 3, 4 oder 5,
**dadurch gekennzeichnet, dass** die Bandbreite der Auswerteschaltung gleichgroß gewählt wird wie die Bandbreite der ZF-Selektion des Funkempfängers.

7. Verfahren nach Anspruch 5,
**dadurch gekennzeichnet, dass** die logische Schaltungsanordnung (MP) die Anzahl der je Zeiteinheit auftretenden Umschaltvorgänge von einer Antenne auf eine andere Antenne auf eine vorgebbare Höchstzahl begrenzt.

8. Verfahren nach Anspruch 4 oder 5,
**dadurch gekennzeichnet, dass** die logische Auswerteschaltung (MP) die Antenne mit der größten Feldstärke und/oder der geringsten Störung auswählt.

9. Verfahren nach Anspruch 6,
**dadurch gekennzeichnet, dass** für die Auswerteschaltung (AW) ein ZF-Signal an der letzten ZF-Stufe des Funkempfängers (TU) abgegriffen wird.

10. Verfahren nach Anspruch 9,
**dadurch gekennzeichnet, dass** für die Auswerteschaltung (AW) ein ZF-Signal an einer ZF-Stufe des Funkempfängers (TU) abgegriffen und über einen Bandpass, dessen Bandbreite größer gewählt ist als die Bandbreite dieser ZF-Stufe, der Auswerteschaltung (AW) zugeführt wird.

11. Antennendiversity-Empfangsanlage mit einem Antennenwahlschalter (AS), mit einer Auswerteschaltung (AW) und mit einem Funkempfänger (TU), wobei der Antennenwahlschalter (AS) vom Funkempfänger (TU) räumlich getrennt ist, während die Auswerteschaltung (AW) beim oder im Funkempfänger (TU) angeordnet ist, wobei die Antennen (A1, A2, A3, A4) und der Antennenwahlschalter (AS) über eine gemeinsame Antennenleitung (AL) mit dem Funkempfänger (TU) verbunden sind und wobei der Antennenwahlschalter (AS) zu einer Antenneneinheit (A) gehört, während der Funkempfänger (TU) und die Auswerteschaltung (AW) zu einer Empfangseinheit (E) gehören, die räumlich voneinander getrennt sind,
**dadurch gekennzeichnet, dass** die Antennen (A1, A2, A3, A4) an die Eingänge des Antennenwahlschalters (AS) angeschlossen sind, dessen Ausgang mit dem Eingang einer ersten Weiche (W1) verbunden ist, deren erster Ausgang mit dem Steuereingang einer Steuerschaltung (SS) verbunden ist und deren zweiter Ausgang über einen Ruhelastwiderstand (RR) und einen mittels eines steuerbaren Schalters (S) parallel zum Ruhelastwiderstand (RR) schaltbaren Lastwiderstand (RL) auf Bezugspotential liegt, dass ein erster Steuerausgang der Steuerschaltung (SS) mit dem Steuereingang des Antennenwahlschalters (AS) und ein zweiter Steuerausgang der Steuerschaltung (SS) mit dem Steuereingang des steuerbaren Schalters (S) verbunden ist, dass der Antennenwahlschalter (AS), die erste Weiche (W1), die Steuerschaltung (SS), der steuerbare Schalter (S), der Ruhelastwiderstand (RR) und der Lastwiderstand (RL) die Antenneneinheit (A) bilden, dass in der Empfangseinheit (E) der Ausgang einer zweiten Weiche (W2) mit dem Eingang des Funkempfängers (TU) verbunden ist, dass ein erster Ausgang des Funkempfängers (TU) mit dem Eingang der Auswahlschaltung (AW) und ein zweiter Ausgang des Funkempfängers (TU) mit einem ersten Eingang einer logischen Schaltungsanordnung (MP) verbunden ist, dass ein erster Ausgang der Auswahlschaltung (AW) mit einem zweiten Eingang der logischen Schaltungsanordnung (MP) und der Ausgang der logischen Schaltungsanordnung (MP) mit einem zweiten Eingang der Auswahlschaltung (AW) verbunden ist, dass der Ausgang der Auswahlschaltung (AW) mit einem ersten Eingang der zweiten Weiche (W2) verbunden ist, dass die zweite Weiche (W2), der Funkempfänger (TU), die Auswahlschaltung (AW) und die logische Schaltungsanordnung (MP) die Empfangseinheit (E) bilden und dass die erste Weiche (W1) der Antenneneinheit (A) über eine Antennenleitung (AL) mit der zweiten Weiche (W2) der Empfangseinheit (E) verbunden ist.

12. Antennendiversity-Empfangsanlage mit einem Antennenwahlschalter (AS), mit einer Auswerteschaltung (AW) und mit einem Funkempfänger (TU), wobei der Antennenwahlschalter (AS) vom Funkempfänger (TU) räumlich getrennt ist, während die Auswerteschaltung (AW) beim oder im Funkempfänger (TU) angeordnet ist, wobei die Antennen (A1, A2, A3, A4) und der Antennenwahlschalter (AS) über eine gemeinsame Antennenleitung (AL) mit dem Funkempfänger (TU) verbunden sind und wobei der Antennenwahlschalter (AS) zu einer Antenneneinheit (A) gehört, während der Funkempfänger (TU) und die Auswerteschaltung (AW) zu einer Empfangseinheit (E) gehören, die räumlich voneinander getrennt sind,
**dadurch gekennzeichnet, dass** die Antennen (A1, A2, A3, A4) an die Eingänge des Antennenwahlschalters (AS) angeschlossen sind, dessen Ausgang mit dem Eingang einer ersten Weiche (W1) verbunden ist, deren erster Ausgang mit dem Steuereingang einer Steuerschaltung (SS) verbunden ist und deren zweiter Ausgang über einen Ruhelastwiderstand (RR) und einen mittels eines steuerbaren Schalters (S) parallel zum Ruhelastwiderstand (RR) schaltbaren Lastwiderstand (RL) auf Bezugspotential liegt, dass ein erster Steuerausgang der Steuerschaltung (SS) mit dem Steuereingang des Antennenwahlschalters (AS) und ein zweiter Steuerausgang der Steuerschaltung (SS) mit dem Steuereingang des steuerbaren Schalters (S) verbunden ist, dass der Antennenwahlschalter (AS), die erste Weiche (W1), die Steuerschaltung (SS), der steuerbare Schalter (S), der Ruhelastwiderstand (RR) und der Lastwiderstand (RL) die Antenneneinheit (A) bilden, dass in der Empfangseinheit (E) der Ausgang einer zweiten Weiche (W2) mit dem Eingang des Funkempfängers (TU) verbunden ist, dass der Ausgang eines Stördetektors (DM) des Funkempfängers (TU), der bei Störungen im Empfangssignal Störungen anzeigende Impulse erzeugt, mit dem Eingang eines Integrators (I) verbunden ist, dessen Ausgang mit dem Eingang eines Schwellwertdetektors (D) verbunden ist, dass der Ausgang des Schwellwertdetektors (D) mit einem ersten Eingang eines Impulsgenerators (IG) verbunden ist, dessen Ausgang mit einem ersten Eingang der zweiten Weiche (W2) verbunden ist, dass die zweite Weiche (W2), der Funkempfänger (TU), der Stördetektor (DM), der Integrator (I), der Schwellwertdetektor (D) und der Impulsgenerator (IG) die Empfangseinheit (E) bilden und dass die erste Weiche (W1) der Antenneneinheit (A) über eine Antennenleitung (AL) mit der zweiten Weiche (W2) der Empfangseinheit verbunden ist.

13. Antennendiversity-Empfangsanlage nach Anspruch 11,
**dadurch gekennzeichnet, dass** die Auswerteschaltung (AW) in der logischen Schaltungsanordnung (MP) integriert ist.

14. Antennendiversity-Empfangsanlage nach Anspruch 12,
**dadurch gekennzeichnet, dass** eine logische Schaltungsanordnung (MP) an den Impulsgenerator (IG) angeschlossen ist.

15. Antennendiversity-Empfangsanlage nach Anspruch 14,
**dadurch gekennzeichnet, dass** der Integrator (I), der Schwellwertdetektor (D) und der Impulsgenerator (IG) in der logischen Schaltungsanordnung (MP) integriert sind.

16. Verfahren nach Anspruch 3, 4, 5, 7 oder 8 oder Antennendiversity-Empfangsanlage nach Anspruch 11, 13, 14 oder 15,
**dadurch gekennzeichnet, dass** für die logische Schaltungsanordnung (MP) ein Mikroprozessor, ein Mikrocontroller oder ein Mikrocomputer werwendet wird .

17. Verfahren nach einem der vorangehenden Verfahrensansprüche oder Antennendiversity-Empfangsanlage nach einem der vorangehenden Vorrichtungsansprüche,
**dadurch gekennzeichnet, dass** für die Auswerteschaltung (AW) keine eigenen Filter vorgesehen sind und dass die Filter des Funkempfängers (TU) von der Auswerteschaltung (AW) mitbenutzt werden bzw. auch für die Auswerteschaltung (AW) verwendet werden.

18. Verfahren nach einem der vorangehenden Verfahrensansprüche oder Antennendiversity-Empfangsanlage nach einem der vorangehenden Vorrichtungsansprüche,
**dadurch gekennzeichnet, dass** für die Antennenleitung (AL) eine HF-Leitung oder eine Lichtfaserleitung verwendet wird.

## Claims

1. Method of selecting one of a plurality of antennas (A1, A2, A3, A4) of an antenna diversity reception installation with an antenna selector switch (AS), with an evaluation circuit (AW) and with a radio receiver (TU), wherein the antenna selector switch (AS) is spatially separated from the radio receiver (TU), whilst the evaluation circuit (AW) is disposed at or in the radio receiver (TU), wherein the antennas (A1, A2, A3, A4) and the antenna selector switch (AS) are connected by way of a common antenna line (AL) and wherein the antenna selector switch (AS) belongs to an antenna unit, whilst the radio receiver (TU) and the evaluation circuit (AW) belong to a receiver unit (E), which are spatially separated from one another, **characterised in that** the antenna line (AL) in the antenna unit (A) lies at reference potential via a quiescent load resistor (RR), that for switching on the antenna unit (A) is supplied by the receiver unit (E) with a direct current which in the antenna unit (A) switches a load resistor (RL) in parallel with the quiescent load resistor (RR), that the receiver unit (E) recognises by the reduction in the resistance due to the parallel connection of the quiescent load resistor (RR) and the load resistor (RL) that the antenna unit (A) is switched on, that for switching off of the antenna unit (A) the direct current is switched off by the receiver unit (E) and the load resistor (RL) is separated from the quiescent load resistor (RR), so that the receiver unit (E) recognises from the increase in the resistance that the antenna unit (A) is switched off.

2. Method as claimed in Claim 1, **characterised in that** in the antenna unit (A) a control circuit (SS) controls the antenna selector switch (AS) and a controllable switch (S) which switches the load resistor (RL) in parallel with the quiescent load resistor (RR).

3. Method as claimed in Claim 1 or 2, **characterised in that** in the receiver unit (E) the selector circuit (AW) and a logic circuit arrangement (MP) generate the control signals for the antenna unit (A).

4. Method as claimed in Claim 1, 2 or 3, **characterised in that** the logic circuit arrangement (MP) carries out the selection of an antenna according to other criteria than the evaluation circuit (AW) when the field strength in the case of all antennas (A1, A2, A3, A4) lies above an upper threshold or below a lower threshold.

5. Method as claimed in Claim 1, 2, 3 or 4, **characterised in that** the logic circuit arrangement (MP) counts the number of switchover operations from one antenna to another antenna which occur per unit of time, that with a predeterminable maximum number of switchovers per unit of time the logic circuit arrangement (MP) carries out the selection of an antenna according to other criteria than the evaluation circuit.

6. Method as claimed in Claim 1, 2, 3, 4 or 5, **characterised in that** the bandwidth of the evaluation circuit is chosen to be the same as the bandwidth of the IF selection of the radio receiver.

7. Method as claimed in Claim 5, **characterised in that** the logic circuit arrangement (MP) limits the number of switchover operations from one antenna to another antenna occurring per unit of time to a predeterminable maximum number.

8. Method as claimed in Claim 4 or 5, **characterised in that** the logic evaluation circuit (MP) selects the antenna with the greatest field strength and/or the least interference.

9. Method as claimed in Claim 6, **characterised in that** for the evaluation circuit (AW) an IF signal is tapped at the last IF stage of the radio receiver (TU).

10. Method as claimed in Claim 9, **characterised in that** for the evaluation circuit (AW) an IF signal is tapped at an IF stage of the radio receiver (TU) and is delivered to the evaluation circuit (AW) via a band-pass, the bandwidth of which is selected to be greater than the bandwidth of this IF stage.

11. Antenna diversity reception installation with an antenna selector switch (AS), with an evaluation circuit (AW) and with a radio receiver (TU), wherein the antenna selector switch (AS) is spatially separated from the radio receiver (TU), whilst the evaluation circuit (AW) is disposed at or in the radio receiver (TU), wherein the antennas (A1, A2, A3, A4) and the antenna selector switch (AS) are connected to the radio receiver (TU) via a common antenna line (AL) and wherein the antenna selector switch (AS) belongs to an antenna unit (A), whilst the radio receiver (TU) and the evaluation circuit (AW) belong to a receiver unit (E), which are spatially separated from one another, **characterised in that** the antennas (A1, A2, A3, A4) are connected to the inputs of the antenna selector switch (AS), the output of which is connected to the input of a first separator (W1), the first output of which is connected to the control input of a control circuit (SS) and the second output of which lies at reference potential via a quiescent load resistor (RR) and a load resistor (RL) which can be switched in parallel with the quiescent load resistor (RR) by means of a controllable switch (S), that a first control output of the control circuit (SS) is connected to the control input of the antenna selector switch (AS) and a second control output of the control circuit (SS) is connected to the control input of the controllable switch (S), that the antenna selector switch (AS), the first separator (W1), the control circuit (SS), the controllable switch (S), the quiescent load resistor (RR) and the load resistor (RL) form the antenna unit (A), that in the receiver unit (E) the output of a second separator (W2) is connected to the input of the radio receiver (TU), that a first output of the radio receiver (TU) is connected to the input of the selector circuit (AW) and a second output of the radio receiver (TU) is connected to the first input of a logic circuit arrangement (MP), that a first output of the selector circuit (AW) is connected to a second input of the logic circuit arrangement (MP) and the output of the logic circuit arrangement (MP) is connected to a second input of the selector circuit (AW), that the output of the selector circuit (AW) is connected to a first input of the second separator (W2), that the second separator (W2), the radio receiver (TU), the selector circuit (AW) and the logic circuit arrangement (MP) form the receiver unit (E) and that the first separator (W1) of the antenna unit (A) is connected via an antenna line (AL) to the second separator (W2) of the receiver unit (E).

12. Antenna diversity reception installation with an antenna selector switch (AS), with an evaluation circuit (AW) and with a radio receiver (TU), wherein the antenna selector switch (AS) is spatially separated from the radio receiver (TU), whilst the evaluation circuit (AW) is disposed at or in the radio receiver (TU), wherein the antennas (A1, A2, A3, A4) and the antenna selector switch (AS) are connected to the radio receiver (TU) via a common antenna line (AL) and wherein the antenna selector switch (AS) belongs to an antenna unit (A), whilst the radio receiver (TU) and the evaluation circuit (AW) belong to a receiver unit (E), which are spatially separated from one another, **characterised in that** the antennas (A1, A2, A3, A4) are connected to the inputs of the antenna selector switch (AS), the output of which is connected to the input of a first separator (W1), the first output of which is connected to the control input of a control circuit (SS) and the second output of which lies at reference potential via a quiescent load resistor (RR) and a load resistor (RL) which can be switched in parallel with the quiescent load resistor (RR) by means of a controllable switch (S), that a first control output of the control circuit (SS) is connected to the control input of the antenna selector switch (AS) and a second control output of the control circuit (SS) is connected to the control input of the controllable switch (S), that the antenna selector switch (AS), the first separator (W1), the control circuit (SS), the controllable switch (S), the quiescent load resistor (RR) and the load resistor (RL) form the antenna unit (A), that in the receiver unit (E) the output of a second separator (W2) is connected to the input of the radio receiver (TU), that the output of an interference detector (DM) of the radio receiver (TU), which in the event of interference in the received signal generates pulses which indicate interference, is connected to the input of an integrator (I), the output of which is connected to the input of a threshold value detector (D), that the output of the threshold detector (D) is connected to a first input of a pulse generator (IG), the output of which is connected to a first input of the second separator (W2), that the second separator (W2), the radio receiver (TU), the interference detector (DM), the integrator(I), the threshold value detector (D) and the pulse generator (IG) form the receiver unit (E), and that the first separator (W1) of the antenna unit (A) is connected via an antenna line (AL) to the second separator (W2) of the receiver unit.

13. Antenna diversity reception installation as claimed in Claim 11, **characterised in that** the evaluation circuit (AW) is integrated into the logic circuit arrangement (MP).

14. Antenna diversity reception installation as claimed in Claim 12, **characterised in that** a logic circuit arrangement (MP) is connected to the pulse generator (IG).

15. Antenna diversity reception installation as claimed in Claim 14, **characterised in that** the integrator (I), the threshold value detector (D) and the pulse generator (IG) are integrated into the logic circuit arrangement (MP).

16. Method as claimed in Claim 3, 4, 5, 7 or 8 or antenna diversity reception installation as claimed in Claim 11, 13, 14 or 15, **characterised in that** for the logic circuit arrangement (MP) a microprocessor, a microcontroller or a microcomputer is used.

17. Method as claimed in any one of the preceding method claims or antenna diversity reception installation as claimed in any one of the preceding apparatus claims, **characterised in that** for the evaluation circuit (AW) no dedicated filters are provided and that the filters of the radio receiver (TU) are also used by the evaluation circuit (AW) or are also used for the evaluation circuit (AW).

18. Method as claimed in any one of the preceding method claims or antenna diversity reception installation as claimed in any one of the preceding apparatus claims, **characterised in that** an RF line or an optical fibre line is used for the antenna line (AL).

## Revendications

1. Procédé de sélection d'une antenne parmi une pluralité d'antennes (A1, A2, A3, A4) d'une installation de réception en diversité, comportant un sélecteur d'antennes (AS), un composant d'analyse (AW) et un récepteur radio (TU), le sélecteur d'antennes (AS) étant séparé physiquement du récepteur radio (TU), alors que le composant d'analyse (AW) est agencé près du récepteur radio (TU) ou dans celui-ci, les antennes (A1, A2, A3, A4) et le sélecteur d'antennes (AS) étant reliés au récepteur radio (TU) via une ligne d'antenne (AL) commune et le sélecteur d'antennes (AS) faisant partie d'une unité d'antenne (A), alors que le récepteur radio (TU) et le composant d'analyse (AW) font partie d'une unité de réception (E) lesquelles unités sont séparées physiquement l'une de l'autre, **caractérisé en ce que** la ligne d'antenne (AL) dans l'unité d'antenne (A) est mise au potentiel de référence par l'intermédiaire d'une résistance de charge de repos (RR), **en ce que**, pour la connexion de l'unité d'antenne (A), celle-ci est sollicitée par l'unité de réception (E) avec un courant continu, par lequel une résistance de charge (RL) est commutée en parallèle à la résistance de charge de repos (RR) dans l'unité d'antenne (A), **en ce que** l'unité de réception (E), par la diminution de la résistance due à la commutation en parallèle de la résistance de charge de repos (RR) et de la résistance de charge (RL), détecte que l'unité d'antenne (A) est connectée, **en ce que**, pour la déconnexion de l'unité d'antenne (A), le courant continu est interrompu par l'unité de réception (E) et la résistance de charge (RL) est séparée de la résistance de charge de repos (RR), de telle sorte que l'unité de réception (E) détecte, à partir de l'augmentation de la résistance, que l'unité d'antenne (A) est déconnectée.

2. Procédé selon la revendication 1, **caractérisé en ce que**, dans l'unité d'antenne (A), un composant de commande (SS) commande le sélecteur d'antennes (AS) et un commutateur (S) réglable, par lequel la résistance de charge (RL) est commutée parallèlement à la résistance de charge de repos (RR).

3. Procédé selon la revendication 1 ou 2, **caractérisé en ce que**, dans l'unité de réception (E), le composant d'analyse (AW) et un système de circuit logique (MP) génèrent des signaux de commande pour l'unité d'antenne (A).

4. Procédé selon la revendication 1, 2 ou 3, **caractérisé en ce que** le système de circuit logique (MP) procède à la sélection d'une antenne selon d'autres critères que le composant d'analyse (AW), lorsque l'intensité de champ pour toutes les antennes (A1, A2, A3, A4) se situe au-dessus d'une valeur seuil supérieure ou au-dessous d'une valeur seuil inférieure.

5. Procédé selon la revendication 1, 2, 3 ou 4, **caractérisé en ce que** le système de circuit logique (MP) compte le nombre de processus de commutation d'une antenne à une autre se produisant par unité de temps, **en ce que**, lorsque les processus de commutation par unité de temps atteignent un nombre maximum pouvant être prédéfini, le système de circuit logique (MP) procède à la sélection d'une antenne selon d'autres critères que le composant d'analyse.

6. Procédé selon la revendication 1, 2, 3, 4 ou 5, **caractérisé en ce que** la largeur de bande du composant d'analyse est choisie identique à la largeur de bande de la sélection FI du récepteur radio.

7. Procédé selon la revendication 5, **caractérisé en ce que** le système de circuit logique (MP) limite le nombre de processus de commutation d'une antenne à une autre se produisant par unité de temps à un nombre maximum pouvant être prédéfini.

8. Procédé selon la revendication 4 ou 5, **caractérisé en ce que** le système de circuit logique (MP) sélectionne l'antenne avec la plus grande intensité de champ et/ou avec le plus faible parasitage.

9. Procédé selon la revendication 6, **caractérisé en ce qu'**un signal FI est capté pour le composant d'analyse (AW) au dernier étage FI du récepteur radio (TU).

10. Procédé selon la revendication 9, **caractérisé en ce qu'**un signal FI pour le composant d'analyse (AW) est capté à un étage FI du récepteur radio (TU) et est acheminé vers le composant d'analyse (AW) par l'intermédiaire d'un filtre passe-bande, dont la largeur de bande est choisie supérieure à la largeur de bande de cet étage FI.

11. Installation de réception en diversité, comportant un sélecteur d'antennes (AS), un composant d'analyse (AW) et un récepteur radio (TU), le sélecteur d'antennes (AS) étant séparé physiquement du récepteur radio (TU), alors que le composant d'analyse (AW) est agencé près du récepteur radio (TU) ou dans celui-ci, les antennes (A1, A2, A3, A4) et le sélecteur d'antennes (AS) étant reliés au récepteur radio (TU) via une ligne d'antenne (AL) commune et le sélecteur d'antennes (AS) faisant partie d'une unité d'antenne (A), alors que le récepteur radio (TU) et le composant d'analyse (AW) font partie d'une unité de réception (E) lesquelles unités sont séparées physiquement l'une de l'autre, **caractérisée en ce que** les antennes (A1, A2, A3, A4) sont raccordées aux entrées du sélecteur d'antennes (AS), dont la sortie est reliée à l'entrée d'un premier filtre séparateur (W1), dont la première sortie est reliée à l'entrée de commande d'un composant de commande (SS) et dont la deuxième sortie est mise au potentiel de référence par l'intermédiaire d'une résistance de charge de repos (RR) et d'une résistance de charge (RL) pouvant être commutée parallèlement à la résistance de charge de repos (RR) au moyen d'un commutateur (S) réglable, **en ce qu'**une première sortie de commande du composant de commande (SS) est reliée à l'entrée de commande du sélecteur d'antennes (AS) et une deuxième sortie de commande du composant de commande (SS) est reliée à l'entrée de commande du commutateur (S) réglable, **en ce que** le sélecteur d'antennes (AS), le premier filtre séparateur (W1), le composant de commande (SS), le commutateur (S) réglable, la résistance de charge de repos (RR) et la résistance de charge (RL) forment l'unité d'antenne (A), **en ce que**, dans l'unité de réception (E), la sortie d'un deuxième filtre séparateur (W2) est reliée à l'entrée du récepteur radio (TU), **en ce qu'**une première sortie du récepteur radio (TU) est reliée à l'entrée du sélecteur d'antennes (AS) et une deuxième sortie du récepteur radio (TU) est reliée à une première entrée d'un système de circuit logique (MP), **en ce qu'**une première sortie du sélecteur d'antennes (AS) est reliée à une deuxième entrée du système de circuit logique (MP) et la sortie du système de circuit logique (MP) est reliée à une deuxième entrée du sélecteur d'antennes (AS), **en ce que** la sortie du sélecteur d'antennes (AS) est reliée à une première entrée du deuxième filtre séparateur (W2), **en ce que** le deuxième filtre séparateur (W2), le récepteur radio (TU), le sélecteur d'antennes (AS) et le système de circuit logique (MP) forment l'unité de réception (E) et **en ce que** le premier filtre séparateur (W1) de l'unité d'antenne (A) est relié au deuxième filtre séparateur (W2) de l'unité de réception (E).

12. Installation de réception en diversité, comportant un sélecteur d'antennes (AS), un composant d'analyse (AW) et un récepteur radio (TU), le sélecteur d'antennes (AS) étant séparé physiquement du récepteur radio (TU), alors que le composant d'analyse (AW) est agencé près du récepteur radio (TU) ou dans celui-ci, les antennes (A1, A2, A3, A4) et le sélecteur d'antennes (AS) étant reliés au récepteur radio (TU) via une ligne d'antenne (AL) commune et le sélecteur d'antennes (AS) faisant partie d'une unité d'antenne (A), alors que le récepteur radio (TU) et le composant d'analyse (AW) font partie d'une unité de réception (E) lesquelles unités sont séparées physiquement l'une de l'autre, **caractérisée en ce que** les antennes (A1, A2, A3, A4) sont raccordées aux entrées du sélecteur d'antennes (AS), dont la sortie est reliée à l'entrée d'un premier filtre séparateur (W1), dont la première sortie est reliée à l'entrée de commande d'un composant de commande (SS) et dont la deuxième sortie est mise au potentiel de référence par l'intermédiaire d'une résistance de charge de repos (RR) et d'une résistance de charge (RL) pouvant être commutée parallèlement à la résistance de charge de repos (RR) au moyen d'un commutateur (S) réglable, **en ce qu'**une première sortie de commande du composant de commande (SS) est reliée à l'entrée de commande du sélecteur d'antennes (AS) et une deuxième sortie de commande du composant de commande (SS) est reliée à l'entrée de commande du commutateur (S) réglable, **en ce que** le sélecteur d'antennes (AS), le premier filtre séparateur (W1), le composant de commande (SS), le commutateur (S) réglable, la résistance de charge de repos (RR) et la résistance de charge (RL) forment l'unité d'antenne (A), **en ce que**, dans l'unité de réception (E), la sortie d'un deuxième filtre séparateur (W2) est reliée à l'entrée du récepteur radio (TU), **en ce que** la sortie d'un détecteur de parasites (DM) du récepteur radio (TU), lequel, en présence de parasites dans le signal de réception, génère des impulsions signalant des parasites, est reliée à l'entrée d'un intégrateur (1), dont la sortie est reliée à l'entrée d'un détecteur de valeur seuil (D), **en ce que** la sortie du détecteur de valeur seuil (D) est reliée à une première entrée d'un générateur d'impulsions (IG), dont la sortie est reliée à une première entrée du deuxième filtre séparateur (W2), **en ce que** le deuxième filtre séparateur (W2), le récepteur radio (TU), le détecteur de parasites (DM), l'intégrateur (I), le détecteur de valeur seuil (D) et le générateur d'impulsions (IG) forment l'unité de réception (E) et **en ce que** le premier filtre séparateur (W1) de l'unité d'antenne (A) est relié au deuxième filtre séparateur (W2) de l'unité de réception (E) via une ligne d'antenne (AL).

13. Installation de réception en diversité selon la revendication 11, **caractérisée en ce que** le composant d'analyse (AW) est intégré dans le système de circuit logique (MP).

14. Installation de réception en diversité selon la revendication 12, **caractérisée en ce qu'**un système de circuit logique (MP) est raccordé au générateur d'impulsions (IG).

15. Installation de réception en diversité selon la revendication 14, **caractérisée en ce que** l'intégrateur (I), le détecteur de valeur seuil (D) et le générateur d'impulsions (IG) sont intégrés dans le système de circuit logique (MP).

16. Procédé selon la revendication 3, 4, 5, 7 ou 8 ou installation de réception en diversité selon la revendication 11, 13, 14 ou 15, **caractérisé en ce que** l'on utilise un microprocesseur, un microcontrôleur ou un micro-ordinateur pour le système de circuit logique (MP).

17. Procédé selon l'une quelconque des revendications de procédé précédentes ou installation de réception en diversité selon l'une quelconque des revendications de dispositif précédentes, **caractérisé en ce que** pour le composant d'analyse (AW) il n'est pas prévu de filtres propres à celui-ci et **en ce que** le filtre du récepteur radio (TU) est utilisé conjointement par le composant d'analyse (AW) ou aussi pour le composant d'analyse (AW).

18. Procédé selon l'une quelconque des revendications de procédé précédentes ou installation de réception en diversité selon l'une quelconque des revendications de dispositif précédentes, **caractérisé en ce que** une ligne HF ou une ligne à fibres optiques est utilisée pour la ligne d'antenne (AL).
